# EUROPEAN PATENT APPLICATION

(11) **EP 1 898 544 A1**
(43) Date of publication of application: **12.03.2008**
(21) Application number: 06781814.6
(22) Date of filing: 27.07.2006
(51) Int. Cl.: H04J 11/00, H04B 7/26, H04J 1/02

(54) **MULTICARRIER TRANSMITTING APPARATUS, MULTICARRIER RECEIVING APPARATUS, AND THEIR METHODS**

(30) Priority: 29.07.2005 JP 2005222218
(71) Applicant: MATSUSHITA ELECTRIC INDUSTRIAL CO., LTD, Kadoma-shi, Osaka 571-8501 (JP)
(72) Inventor: KURI, Kenichi, Matsushita Electric Industrial Co.,Ltd., 2-1-61, Shiromi,Chuo-ku, Osaka 540-6207 (JP); MIYOSHI, Kenichi, Matsushita Electric Industrial Co.,Ltd., 2-1-61, Shiromi,Chuo-ku, Osaka 540-6207 (JP); IMAMURA, Daichi, Matsushita Electric Industrial Co.,Ltd., 2-1-61, Shiromi,Chuo-ku, Osaka 540-6207 (JP); NISHIO, Akihiko, Matsushita Electric Industrial Co.,Ltd., 2-1-61, Shiromi,Chuo-ku, Osaka 540-6207 (JP); HOSHINO, Masayuki, Matsushita Electric Industrial Co.,Ltd., 2-1-61, Shiromi,Chuo-ku, Osaka 540-6207 (JP); FUKUOKA, Masaru, Panasonic Mob.Comm.R&B Lab,Co.,Ltd, Miyagi 981-3206 (JP)
(74) Representative: Grünecker, Kinkeldey, Stockmair & Schwanhäusser Anwaltssozietät
(86) International application number: PCT/JP2006/314903
(87) International publication number: WO 2007/013561

(57) **Abstract**

A multicarrier transmitting apparatus capable of improving the data symbol error rate characteristic to improve the reception quality. In this apparatus, a replacement position deciding part (141) decides, based on a number of replacements notified of by a scheduler (110), which one of a plurality of data symbols should be replaced by a second pilot. Herein, a restricted condition, which is 'RF after replacement is equal to or greater than RF before replacement minus one', is satisfied. Areplacingpart (142) replaces, inaccordance with the replacement position outputted from the replacement position deciding part (141), a part of the data symbols included in a repetition signal by a second pilot symbol, and outputs the resultant replaced signal to an IFFT part (105).

## Description

### Technical Field

The present invention relates to a multicarrier transmitting apparatus, multicarrier receiving apparatus and multicarrier transmitting method used in communication systems such as OFDM (Orthogonal Frequency Division Multiplex).

### Background Art

In recent years, various information such as electronic mail, text files, images and speech becomes the targets for transmission and internet traffic is increasing. Further, following this trend, there is an increasing demand for a high-speed packet transmission technique in mobile communication. However, when high-speed transmission is carried out in mobile communication, influence of delay waves due to multipath cannot be ignored, and transmission performances deteriorate due to frequency selective fading.

As one of counter frequency selective fading techniques, multicarrier communication represented by the OFDM scheme is focused upon. Multicarrier communication refers to a technique of carrying out high-speed transmission by transmitting data using a plurality of subcarriers for which transmission speed is suppressed to an extent that frequency selective fading does not occur. Particularly, in the OFDM scheme, frequencies of a plurality of subcarriers are orthogonal to each other where data is mapped, so that it is possible to achieve highest frequency efficiency in multicarrier communications and realize the OFDM scheme in a relatively simple hardware configuration. Therefore, the OFDM scheme is focused as a communication method used for fourth-generation cellular scheme mobile communication, and is studied in various ways.

Further, in the OFDM scheme, as an additional measure for received errors, there is a "repetition OFDM" or "symbol repetition OFDM" technique for transmitting the same data symbol copied (i.e. repeated) into a plurality of symbols (for example, see Non-Patent Document 1). In this repetition OFDM, by carrying out coherent combining such as maximum ratio combining (MRC) and equal gain combining (EGC), it is possible to obtain diversity gain and improve received quality. Particularly, this repetition OFDM is effective for mobile terminals in a poor channel environment near cell boundaries.
Non-Patent Document 1 : "Performance Comparison between Repetition OFDM and 2-D MC-CDMA for 4G Cellular Downlink Communication", 9th International OFDM-Workshop, Dresden, Germany, September 2004 .

### Disclosure of Invention

### Problems to be Solved by the Invention

However, in repetition OFDM, only data symbols are repeated and so the effect of repetition works on data symbols alone. That is, the effect of repetition does not work in channel estimation carried out using pilot symbols, and so when channel estimation error occurs due to influences of fading, there is a problem that error rate performances of data symbols decrease following the channel estimation error, and received quality deteriorates.

It is therefore an object of the present invention to provide a multicarrier transmitting apparatus, multicarrier receiving apparatus and multicarrier transmitting method which can improve error rate performances of data symbols and improve received quality.

### Means for Solving the Problem

The multicarrier transmitting apparatus according to the first aspect of the present invention adopts a configuration including: a repetition section that generates repetition symbols by repeating a data symbol; a replacement section that replaces part of symbols of the repetition symbols with pilot symbols; and a transmitting section that transmits the repetition symbols partly replaced with pilot symbols.

The multicarrier transmitting apparatus according to the second aspect of the present invention adopts a configuration in which the repetition section repeats data symbols of a plurality of data items to generate repetition symbols of the plurality of data items; and the replacement section replaces repetition symbols comprising part of the plurality of data items with pilot symbols, out of the repetition symbols of the plurality of data items.

### Advantageous Effect of the Invention

The present invention can improve error rate performances of data symbols and improve received quality.

### Brief Description of Drawings

FIG. 1 is a block diagram showing a main configuration of a multicarrier transmitting apparatus according to Embodiment 1;
FIG.2 shows an example of an MCS table according to Embodiment 1;
FIG.3 is a main configuration inside the second pilot replacement section according to Embodiment 1;
FIG.4 shows a detailed example of a transmission frame according to Embodiment 1;
FIG.5 shows a detailed example of replacement position patterns according to Embodiment 1;
FIG.6 is a flowchart showing steps of replacement processing with second pilots according to Embodiment 1 ;
FIG.7 shows in detail what a transmission frame will be like after the replacement processing with second pilots according to Embodiment 1;
FIG.8 shows an example of a frame format for assignment control information according to Embodiment 1;
FIG. 9 is a block diagram showing a main configuration of a multicarrier receiving apparatus according to Embodiment 1;
FIG.10 shows variation of a determining method of replacement positions according to Embodiment 1;
FIG.11 is a block diagram showing a main configuration inside the second pilot replacement section according to Embodiment 2;
FIG.12 is a flowchart showing steps of replacement processing with second pilots according to Embodiment 2;
FIG.13 shows in detail a transmission frame according to Embodiment 2;
FIG.14 shows in detail what a transmission frame will be like after the replacement processing with second pilots according to embodiment 2;
FIG.15 shows an example of a frame format for assignment control information according to Embodiment 2;
FIG.16 is a block diagram showing a main configuration of a multicarrier receiving apparatus according to Embodiment 2;
FIG.17 shows variation of a determining method of replacement positions according to Embodiment 2;
FIG.18 is a block diagram showing a main configuration inside the second pilot replacement section according to Embodiment 3;
FIG.19 is a flowchart showing steps of replacement processing with second pilots according to Embodiment 3;
FIG.20 shows in detail what a transmission frame will be like after the replacement processing with second pilots according to Embodiment 3;
FIG.21 shows an example of a frame format for assignment control information according to Embodiment 3;
FIG.22 shows variation of each embodiment;
FIG.23 shows variation of each embodiment;
FIG.24 shows variation of each embodiment;
FIG.25 shows variation of each embodiment;
FIG.26 shows variation of each embodiment; and
FIG.27 shows variation of each embodiment.

### Best Mode for Carrying Out the Invention

Hereinafter, embodiments of the present invention will be described with reference to the accompanying drawings. Here, cases will be described where the present invention is applied to a communication system of the OFDM-FDD (Frequency Division Duplex) scheme.

### (Embodiment 1)

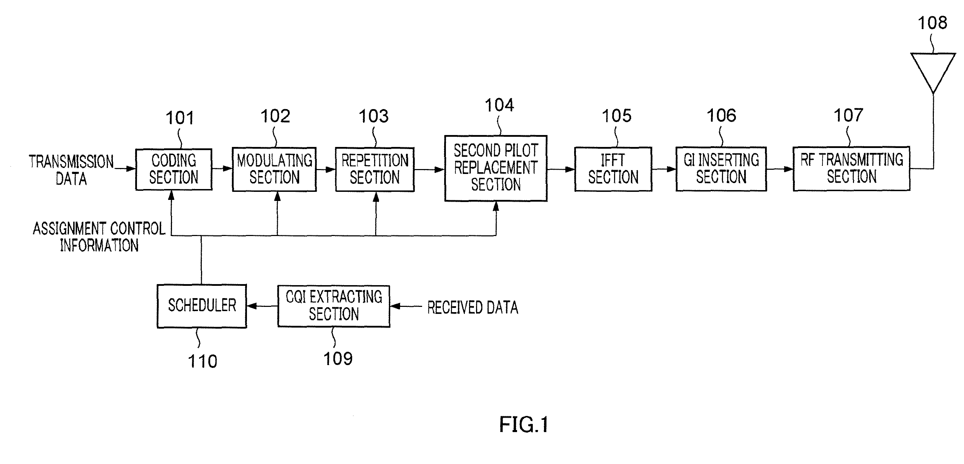

FIG. 1 is a block diagram showing a main configuration of a multicarrier transmitting apparatus according to Embodiment 1 of the present invention.

The multicarrier transmitting apparatus according to this embodiment has coding section 101, modulating section 102, repetition section 103, second pilot replacement section 104, IFFT (Inverse Fast Fourier Transform) section 105, GI (Guard Interval) inserting section 106, RF (Radio Frequency) transmitting section 107, transmitting antenna 108, CQI (Channel Quality Indicator) extracting section 109 and scheduler 110.

Each section of the multicarrier transmitting apparatus according to this embodiment carries out the following operations.

Coding section 101 encodes transmission data including speech, text files and images, according to the coding rate designated by scheduler 110, and outputs the encoded signal to modulating section 102. Further, coding section 101 encodes assignment control information, described later, outputted from scheduler 110 and outputs the result to modulating section 102.

Modulating section 102 modulates the encoded signal outputted from coding section 101 by an M-ary modulation number designated by scheduler 110 on a per subcarrier basis and outputs the obtained modulated signal to repetition section 103 . Repetition section 103 repeats the data symbol in the modulated signal according to the number of symbol repetitions ("repetition factor") designated by scheduler 110, to generate repetition symbols and outputs repetition signals including these repetition symbols to second pilot replacement section 104.

Second pilot replacement section 104 replaces part of the repetition symbols (i.e. data symbols) included in the repetition signals with second pilot symbols, according to the command from scheduler 110, and outputs the replaced signal to IFFT section 105. The configuration inside second pilot replacement section 104 and the replacing method with second pilots will be described in detail later.

By carrying out an inverse fast Fourier transform (IFFT) of the replaced signal outputted from second pilot replacement section 104, IFFT section 105 multiplexes transmission data with a plurality of subcarriers orthogonal from each other and outputs the multiplex signal to GI inserting section 106. GI inserting section 106 inserts a guard interval (GI) into the multiplex signal to reduce inter-symbol interference (ISI) caused by delay waves. RF transmitting section 107 converts the frequency of the baseband signal after guard interval insertion, to high frequency and transmits the signal to a multicarrier receiving apparatus through transmitting antenna 108.

Further, CQI extracting section 109 extracts the CQI (Channel Quality Indicator) reported from each multicarrier receiving apparatus, from received data obtained in a reception processing section (not shown) and outputs the CQI to scheduler 110..

Scheduler 110 carries out frequency scheduling such as subcarrier assignment by referring to anMCS table, based on the CQI outputted from CQI extracting section 109, and outputs assignment control information showing this result to coding section 101, modulating section 102, repetition section 103 and second pilot replacement section 104. The assignment control information includes ID information of subchannels, the MCS (Modulation Coding Scheme) for the subchannel matching this ID and replacement pattern information. In this case, a "subchannel" refers to a band grouping a single or a plurality of subcarriers and is the control unit in frequency scheduling and adaptive control. Further, MCS information includes the M-ary modulation number, coding rate of error correction codes, repetition factor RF (Repetition Factor) and the number of replacements (described later) with second pilots.

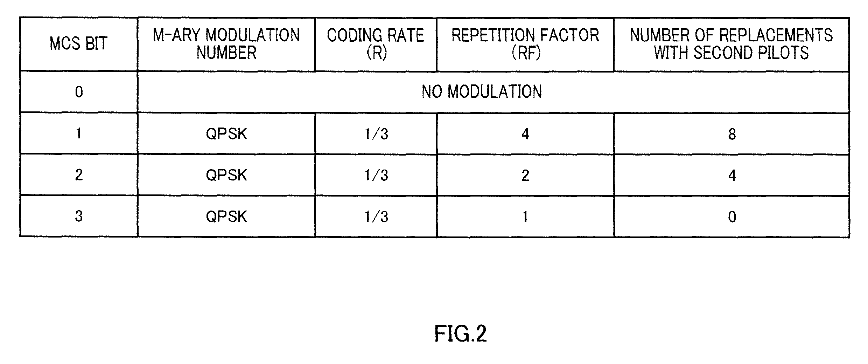

FIG.2 shows an example of an MCS table used in scheduler 110. Further, in this example, the MCS table adopts QPSK for the modulation scheme and 1/3 for the coding rate, but other modulation schemes (for example, 16QAM and 64QAM) and coding rates (for example, 1/2 and 3/4) may be set.

In the MCS table, for each CQI, an MCS bit is set and MCS information matching the MCS bit, that is, an M-ary modulation number, coding rate R, repetition factor RF and the number of replacements with second pilots, is set in advance. Repetition signals outputted from repetition section 103 include pilot symbols (particularly referred to as "first pilot symbols") in addition to data symbols. By replacing part of data symbols with second pilot symbols, second pilot replacement section 104 adds new second pilot symbols to the repetition signals. Generally, a "pilot symbol" (simply referred to as a "pilot") refers to a symbol known by both the multicarrier transmitting apparatus and the multicarrier receiving apparatus, and is used to estimate channel performances (channel estimation) and in synchronization. Further, "first pilot symbols" according to the present invention refer to pilot symbols (common pilot) used in common for a plurality of multicarrier receiving apparatuses. "Second pilot symbols" according to the present invention refer to pilots used by the multicarrier receiving apparatuses for channel estimation (channel variation compensation) .

Scheduler 110 determines how many symbols of data symbols are replaced with second pilot symbols (that is, the number of replacements with second pilot symbols (hereinafter simply referred to as "the number of replacements")) according to the MCS table shown in FIG.2 and outputs the determination to second pilot replacement section 104.

Further, second pilot symbols may be known symbols that are assigned individually to respective multicarrier receiving apparatuses or may be known symbols that are common for respective multicarrier receiving apparatuses. Further, when second pilot symbols are known symbols that are common for respective multicarrier receiving apparatuses, the known symbols may be the same known symbols as the first pilot symbols or different symbols from the first pilot symbols.

Further, as shown in FIG.2, when the repetition factor becomes less, the number of replacements is set less. If a setting is applied such that many replacements are carried out when the repetition factor is less, repetition symbols are lost more than necessary due to replacements and enough diversity gain resulting from repetition cannot be obtained, and so this problem needs to be prevented.

For example, in case of the FDD system, scheduler 110 selects one MCS information based on CQI reported from respective multicarrier receiving apparatuses and outputs selected MCS information by using MCS bits for specifying this MCS information, to coding section 101, modulating section 102, repetition section 103 and second pilot replacement section 104. Further, in case of the TDD system, scheduler 110 determines MCS information of a multicarrier receiving apparatus using a signal received by the multicarrier receiving apparatus having scheduler 110, and outputs the MCS information to coding section 101, modulating section 102, repetition section 103 and second pilot replacement section 104.

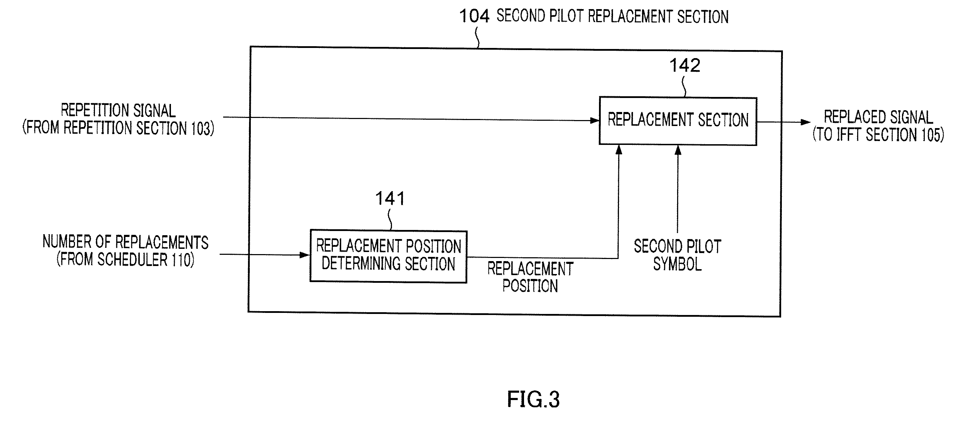

FIG.3 is a block diagram showing a main configuration inside second pilot replacement section 104.

Replacement position determining section 141 determines which data symbols are replaced with second pilots out of a plurality of data symbols, based on the number of replacements reported from scheduler 110. To be more specific, in this embodiment, repetition symbols in the transmission frame are mapped on the two dimensional plane defined by the time domain and the frequency domain, and so replacement position determining section 141 determines data symbols of which positions are replaced on this two dimensional plane, that is, determines replacement positions.

Further, replacement position determining section 141 selects the replacement positions such that no more than two of the data symbols representing the same data are replaced (a group of repetition symbols representing the same data, generated by repeating a given data symbol). That is to say, replacement positions satisfying the constraint condition of (RF after replacement) ≧ (RF before replacement-1) are selected so that it is possible to prevent part of data alone from being replaced with second pilots and prevent diversity gain from not being obtained.

Replacement section 142 replaces part of the data symbols included in the repetition signals with second pilot symbols according to replacement positions outputted from replacement position determining section 141 and outputs the obtained replaced signal to IFFT section 105.

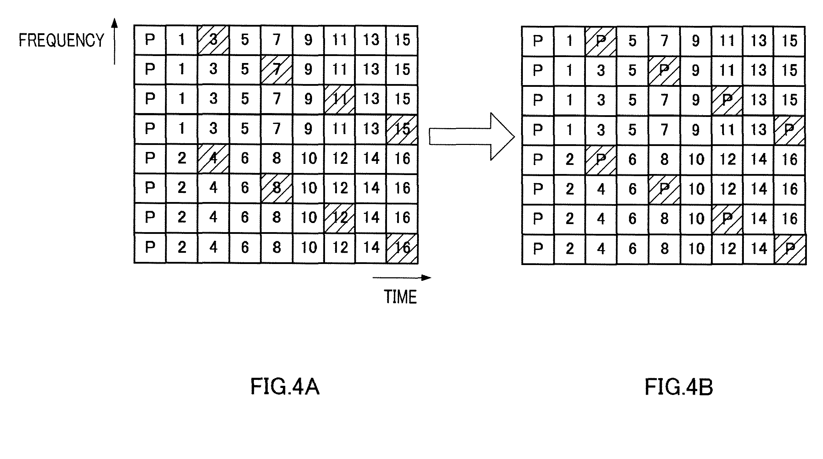

FIG. 4 shows a detailed example of a transmission frame transmitted from the multicarrier transmitting apparatus according to this embodiment. In this case, a case will be described as an example where one frame is formed with nine OFDM symbols each formed with eight subcarriers, that is seventy two symbols (where there are eight pilot symbols and sixty four data symbols), and RF = 4 and the number of replacements = 8 are selected as MCS information. This example will be used as the example of a transmission frame in embodiments.

FIG.4A shows a transmission frame before replacement with second pilots is carried out. Data symbols with diagonal lines are replacement positions determined by replacement position determining section 141. "P" placed in the left first column stands for the first pilot symbols. In this case, an example shows that, among four repetition symbols of each data #3, data #4, data #7, data #8, data #11, data #12, data #15 and data #16, data symbols shown in the figure are replacement positions. On the other hand, FIG. 4B shows a transmission frame after replacement with second pilots is carried out. The data symbols with diagonal lines in FIG.4A are replaced with second pilots in FIG. 4B.

Further, in this case, an example is shown here where, in order to improve the accuracy of channel estimation, replacement positions are set uniformly, without disproportion, in an OFDM symbol of one frame.

Next, the above replacement processing with second pilots will be described in detail.

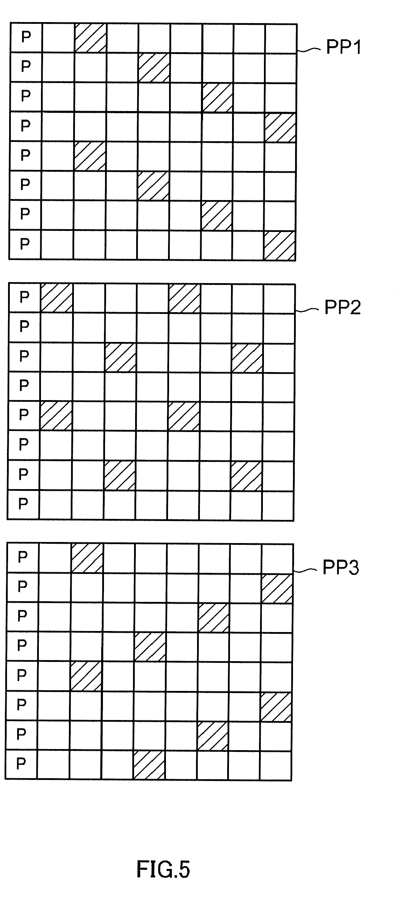

Replacement position determining section 141 records a plurality of replacement position patterns which satisfy the above constraint condition of (RF after replacement) ≧ (RFbefore replacement- 1) andwhichmatch various numbers of replacements, in an internal memory in advance. In this case, a plurality of replacement position patterns are prepared, so that replacement position patterns can be switched following variations of reception performances. FIG.5 shows three detailed examples (PP (Pilot Pattern) 1, PP2, and PP3) of replacement position patterns corresponding to the case where the number of replacements is eight. Positions with diagonal lines are replacement positions. Replacement position determining section 141 selects one pattern finally out of a plurality of replacement position patterns and reports the pattern to replacement section 142. In this case, the replacement position patterns recorded in the internal memory of the replacement position determining section all satisfy the above constraint condition.

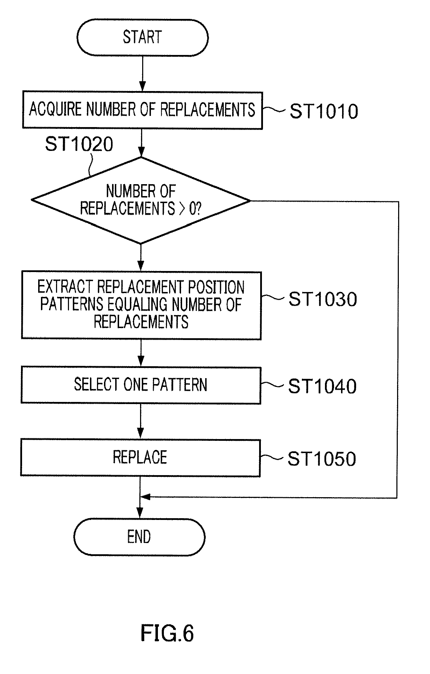

FIG.6 is a flowchart showing steps of the above replacement processing with second pilots.

Replacement position determining section 141 acquires the number of replacements from scheduler 110 (ST1010) and decides whether the number of replacements is larger than zero (ST1020). When the number of replacements is decided to be larger than zero, replacement position patterns matching the number of replacements (in this case, the total number of replacement position patterns is Nrp) are extracted by searching all patterns by all round (ST1030) and one pattern is selected finally out of Nrp patterns (ST1040) . With this method of selecting one pattern, selection may be made in ascending order from pattern number 1 or in descending order from pattern number Nrp. In this case, pattern numbers may be selected in the range of 1 to Nrp based on uniform random numbers. Determining the replacement position pattern practically equals determining replacement positions, so that replacement section 142 replaces part of repetition symbols with second pilots based on this replacement position (ST1050) . Further, information for identifying which replacement position pattern is used is reported to the multicarrier receiving apparatus as assignment control information.

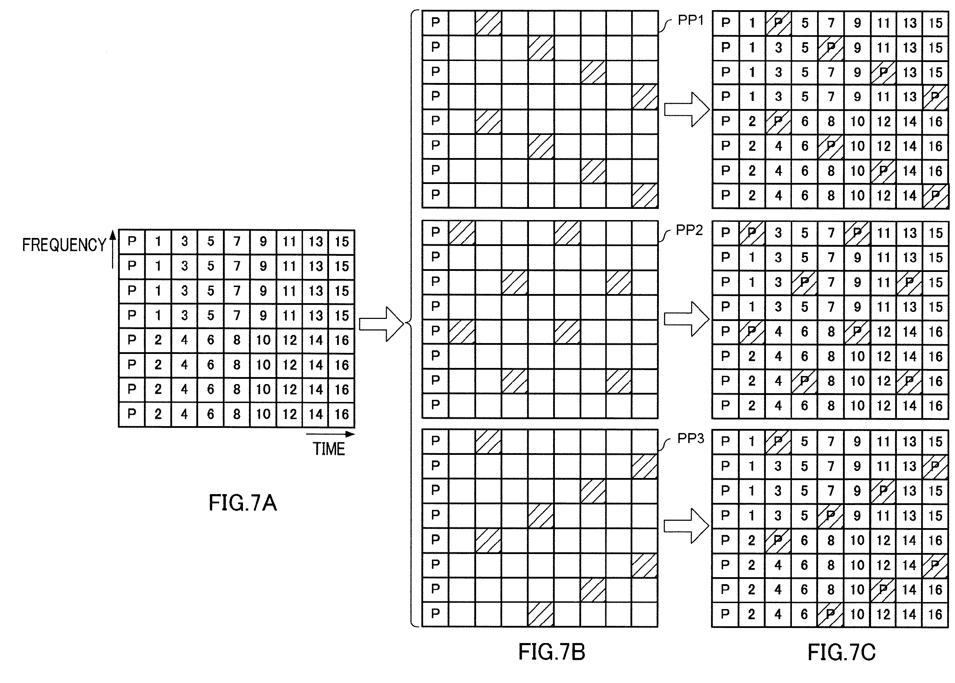

FIG.7 shows in detail what a transmission frame will be like after the replacement processing with second pilots. FIG.7A shows a transmission frame before replacement, FIG.7B shows replacement position patterns and FIG.7C shows transmission frames after replacement.

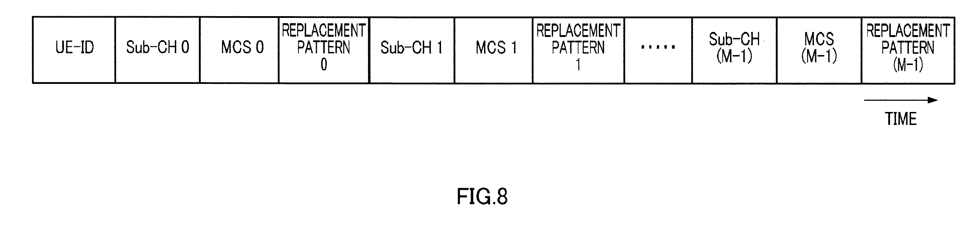

FIG.8 shows an example of a frame format for assignment control information transmitted from the multicarrier transmitting apparatus according to this embodiment.

The multicarrier transmitting apparatus according to this embodiment transmits assignment control information including such as assigning bands and MCS information to a multicarrier receiving apparatus before data transmission to the multicarrier receiving apparatus starts. In this frame format for this assignment control information, as shown in this figure, UE-ID (User Equipment IDentification) is mapped at the top, and, following this, an assigned subchannel ID, the MCS matching this ID and replacement pattern information with second pilots are mapped. Further, in this case, the number of assigned subchannels is represented by "M."

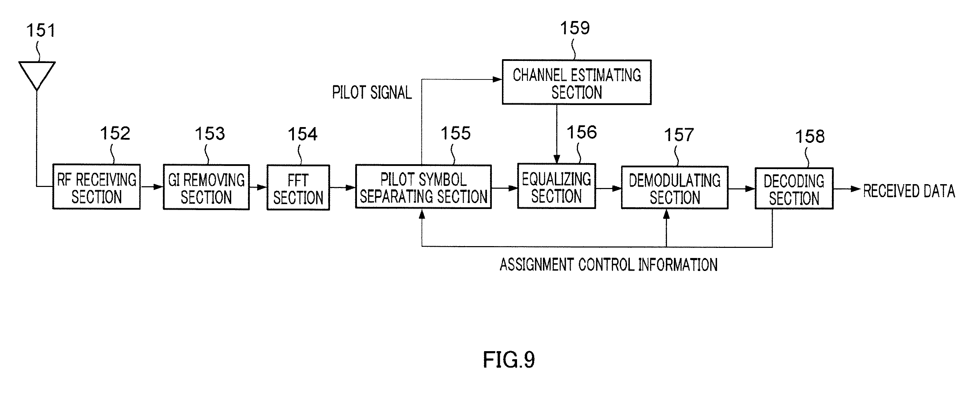

Next, the multicarrier receiving apparatus corresponding to the above multicarrier transmitting apparatus according this embodiment will be described in detail. FIG.9 is a block diagram showing a main configuration of the multicarrier receiving apparatus according to this embodiment.

The multicarrier receiving apparatus according to this embodiment has receiving antenna 151, RF receiving section 152, GI removing section 153, FFT section 154, pilot symbol separating section 155, equalizing section 156, demodulating section 157, decoding section 158 and channel estimating section 159.

Each section of the multicarrier receiving apparatus according to this embodiment operates as described below.

RF receiving section 152 receives a signal transmitted from the multicarrier transmitting apparatus according to this embodiment through antenna 151 and carries out frequency conversion of the signal to a baseband signal. GI removing section 153 removes the guard interval from the received baseband signal. FFT section 154 converts the received signal from which the guard interval is removed, to data of the frequency domain.

Pilot symbol separating section 155 separates data symbols and pilot symbols from the frequency domain signal according to assignment control information outputted from decoding section 158, and outputs the data symbols to equalizing section 156 and the pilot symbols to channel estimating section 159. These pilot symbols are formed with the above first pilot symbol and second pilot symbol.

To be more specific, pilot symbol separating section 155 records a plurality of the same replacement position patterns as a plurality of replacement position patterns used by the multicarrier transmitting apparatus according to this embodiment, in the internal memory. Further, the multicarrier transmitting apparatus reports identification information of the replacement position patterns actually used by the multicarrier transmitting apparatus according to this embodiment as assignment control information, to the multicarrier receiving apparatus according to this embodiment. Pilot symbol separating section 155 separates the first pilot symbols mapped at predetermined positions and outputs the first pilot symbols to channel estimating section 159. Further, pilot symbol separating section 155 learns replacement positions with second pilots by specifying the replacement position patterns actually used out of a plurality of recorded replacement position patterns according to the reported replacement position pattern information, and, by this means, separates second pilots from the frequency domain signal and outputs the result to channel estimating section 159.

Channel estimating section 159 estimates channel response by using first pilot symbols and second pilot symbols outputted from the pilot symbol separating section 155 and outputs estimated channel response estimation information to equalizing section 156. Furhter, channel estimating section 159 has a function for estimating channel quality (for example, SIR) in order to generate CQI information to be reported to the transmitting apparatus.

Equalizing section 156 compensates received data symbols by equalization processing based on channel response estimation information outputted from channel estimating section 159.

Demodulating section 157 demodulates a received data signal outputted from equalizing section 156 using the demodulation scheme matching the M-ary modulation number included in assignment control information outputted from decoding section 158.

Decoding section 158 carries out error correction decoding of the demodulated received signal according to the coding rate included in assignment control information and obtains received data and assignment control information, that is, assigned subchannel ID, MCS information matching this ID and replacement pattern, reported from the multicarrier transmitting apparatus. Assignment control information obtained after decoding is outputted to pilot symbol separating section 155, demodulating section 157.

By adopting the above configuration, the multicarrier receiving apparatus according to this embodiment can receive assignment control information transmitted from the multicarrier transmitting apparatus according to this embodiment and can carry out reception processing of a data signal using the receiving method matching this assignment control information.

As described above, according to this embodiment, in repetition transmission where data symbols are repeated and then transmitted, the transmitting apparatus transmits a data signal in which part of data symbols subjected to repetition is replaced with pilot symbols. In this way, at the receiving apparatus, by carrying out channel estimation using pilot symbols added anew after replacement, the accuracy of channel estimation improves, and part of data symbols alone are replaced, so that it is possible to obtain diversity gain resulting from repetition by using the rest of the data symbols. That is, it is possible to improve error rate performances of data symbols and improve received quality.

Further, according to this embodiment, similar to the case of multiplexing and transmitting a plurality of data items for a plurality of users, to repeat and transmit data symbols of a plurality of data items, data symbols of part of data items, rather than data symbols of all of data items, are replaced with pilot symbols out of repeated data symbols of a plurality of data items. That is, to improve received quality of a signal in which a plurality of data items are multiplexed, it is not necessary to embed the pilot symbol for all of data items and is sufficient to embed the required pilot symbol in a multiplex signal in one frame. In this way, it is possible to set the number of pilot symbols to be embedded for a multiplex signal in one frame, that is, the number of replacements with pilot symbols, according to channel environment, irrespective of the number of multiplexing (the number of users).

Further, according to this embodiment, for repetition symbols of the same data, no more than two repetition symbols are not replaced with pilot symbols. In this case, as for a transmission frame formed with a plurality of data items, it is possible to keep a predetermined number of pilot symbols and improve the accuracy of channel estimation. Furthermore, if the above condition is satisfied, it is possible to avoid replacing data symbols with pilot symbols more than necessary and consequently reducing repetition factors of data symbols substantially, and prevent error rate performances of data symbols from deteriorating due to replacement.

In this case, although a case has been described above with this embodiment where a multicarrier transmitting apparatus records in advance a plurality of replacement position patterns satisfying the constraint condition, there are variation of methods for determining replacement positions, including the following method.

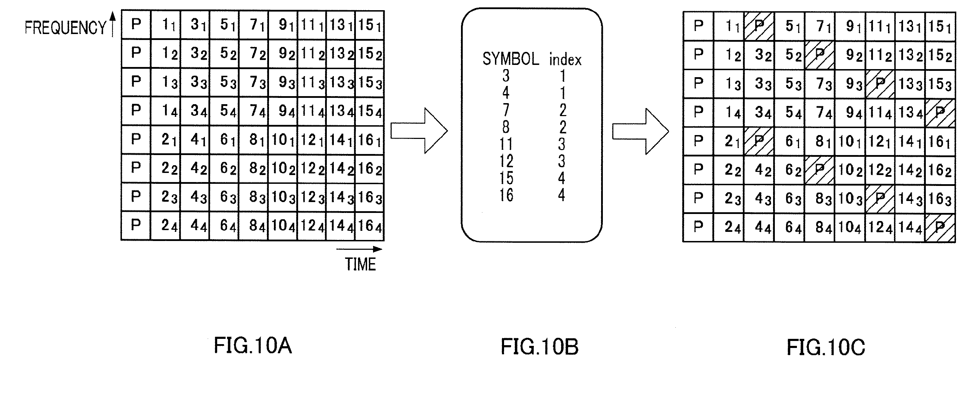

FIG.10 shows variation of a method of determining replacement positions.

In this case, as shown in FIG. 10A, index numbers (in the figure, small numbers 1 to 4 assigned at the lower right of each data symbol) are assigned in each repetition symbol to identify repetition symbols formed with the same data from one another.

As shown in FIG.10B, replacement position determining section 141 is able to determine replacement positions uniquely by designating both data numbers and index numbers, that is, by making sure replacement is not carried out twice or more for one data number, and designating index numbers.

To be more specific, replacement positions are determined by setting data #3, data #4, data #7, data #8, data #11, data #12, data #15 and data #16 as target data to be replaced, and designating index number 1 for data #3, index number 1 for data #4, index number 2 for data #7, index number 2 for data #8, index number 3 for data #11, index number 3 for data #12, index number 4 for data #15 and index number 4 for data #16. In this way, as shown in FIG.10C, it is possible to carry out replacement satisfying the constraint condition.

### (Embodiment 2)

The multicarrier transmitting apparatus according to Embodiment 2 of the present invention has the same basic configuration as the multicarrier transmitting apparatus described in Embodiment 1, and so overlapping description will be omitted. Then, second pilot replacement section 204 having a different configuration from second pilot replacement section 104 of Embodiment 1 will be described.

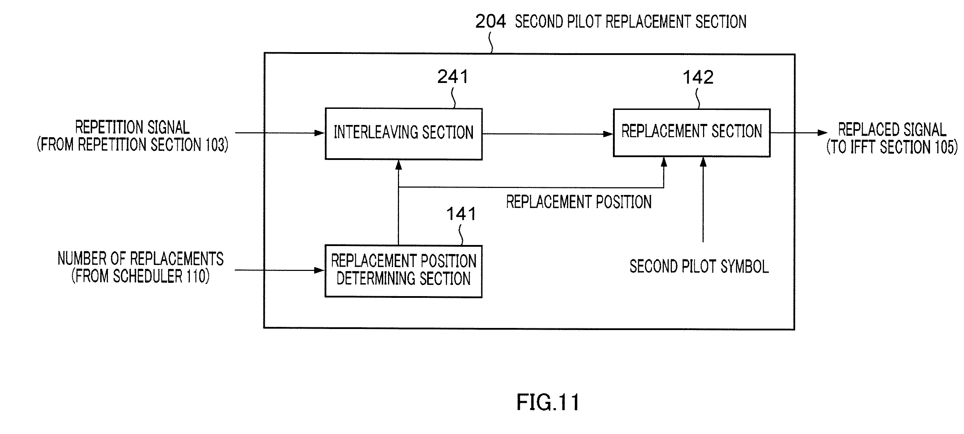

FIG.11 is a block diagram showing a main configuration inside the second pilot replacement section 204. The same components as in second pilot replacement section 104 described in Embodiment 1 will be assigned the same reference numerals and overlapping description will be omitted.

The multicarrier transmitting apparatus according to this embodiment has interleaving section 241 inside second pilot replacement section 204 and improves error robustness with respect to frequency selective fading.

Interleaving section 241 records a plurality of predetermined interleaving patterns in an internal memory and interleaves repetition signals using one pattern. These predetermined interleaving patterns are each associated with replacement position patterns recorded in replacement position determining section 141, and one replacement position pattern is associated with a plurality of interleaving patterns. Further, a plurality of interleaving patterns are provided to enable switching of interleaving patterns depending on variations in reception performances. Furthermore, according to these predetermined interleaving patterns, even when replacement is carried out using a replacement position associated with the interleaving pattern after interleaving, no more than two data symbols of the same data are replaced and the constraint condition of (RF after replacement) ≧ (RF before replacement - 1) is satisfied. In other words, these predetermined interleaving patterns do not map the same repetition symbols at the replacement positions determined at replacement position determining section 141. In this way, it is possible to prevent error rate performances from deteriorating when replacements are carried out too much.

Replacement section 142 replaces the data symbols at replacement positions with second pilots, out of interleaved data symbols included in a transmission frame outputted from interleaving section 241, according to replacement positions outputted from replacement position determining section 141.

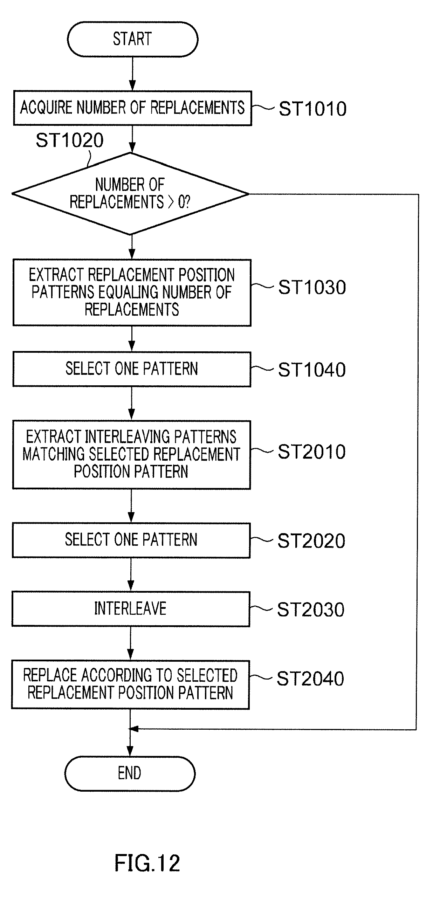

FIG.12 is a flowchart showing steps of replacement processing with the above second pilots. The same steps as the steps described in Embodiment 1 (see FIG.6) will be assigned the same reference numerals and detailed description will be omitted.

In ST1010 to ST1040, replacement position determining section 141 selects one replacement pattern matching the number of replacements. Interleaving section 241 extracts a plurality of interleaving patterns matching the replacement position pattern selected by replacement position determining section 141, out of a plurality of predetermined interleaving patterns recorded in advance (ST2010), selects one pattern out of a plurality of interleaving patterns extracted (ST2020), and carries out the interleaving by this selected interleaving patterns (ST2030). Replacement section 142 replaces part of interleaved repetition symbols with second pilots according to the replacement position pattern selected in ST1040 (ST2040).

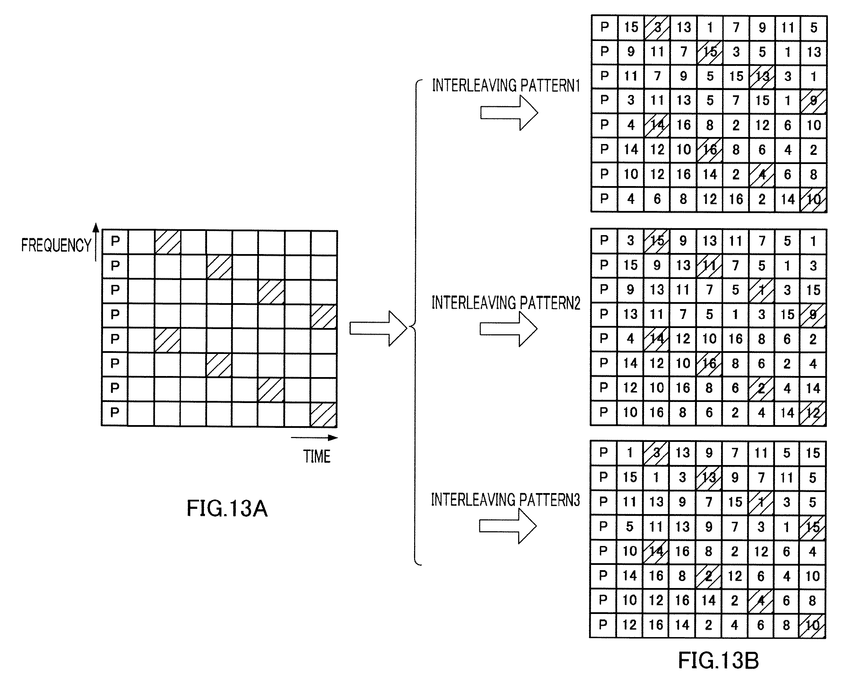

FIG.13 shows in detail the above transmission frame interleaved according to a plurality of predetermined interleaving patterns.

FIG. 13A shows the replacement positions determined by replacement position determining section 141. Symbol positions with diagonal lines are the replacement positions. FIG.13B shows a transmission frame interleaved according to the above predetermined interleaving patterns (here, three patterns). As shown in this figure, repetition symbols of the same data are not mapped at the replacement positions with diagonal lines. For example, in case of interleaving pattern 1, data at the replacement positions with diagonal lines include data #3, data #4, data #9, data #10, data #13, data #14, data #15 and data #16, and the same data do not overlap. That is, no more than two repetition symbols of the same data are not replaced.

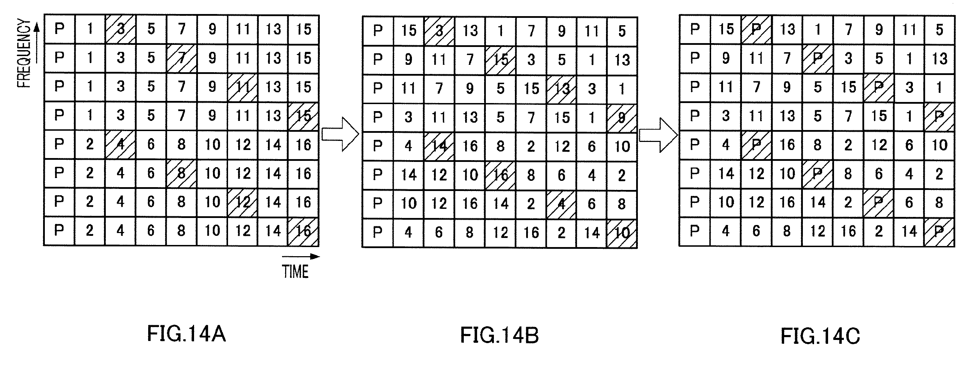

FIG.14 shows the detailed steps in which a transmission frame is processed by replacement processing with the above second pilots.

FIG.14A shows a transmission frame before replacement with second pilots. Data symbols with diagonal lines show replacement positions determined by replacement position determining section 141. FIG.14B shows a transmission frame after interleaving. Data at replacement positions is different from FIG. 14A. FIG.14C shows a transmission frame after replacement with second pilots. Data symbols with diagonal lines in FIG.14B are replaced with second pilots in FIG.14C.

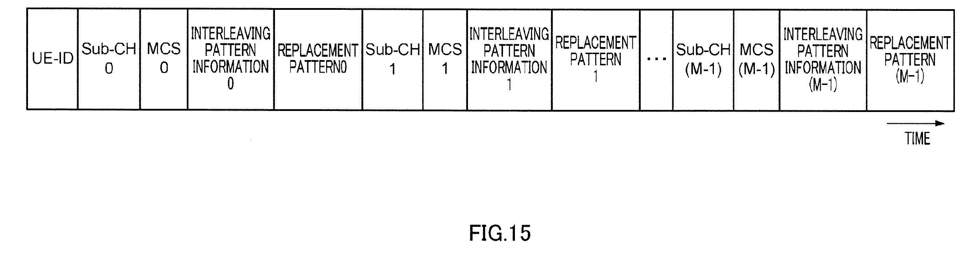

FIG.15 shows an example of a frame format for assignment control information transmitted from the multicarrier transmitting apparatus according to this embodiment.

As described above, in this embodiment, unlike Embodiment 1, it is necessary to report assignment control information including interleaving pattern information to the multicarrier receiving apparatus. In the frame format for this assignment control information, as shown in FIG.15, UE-ID is mapped at the top, and, following this, an assigned subchannel ID, the MCS matching this ID, interleaving pattern information and replacement pattern information for second pilots are mapped. Further, the number of assigned subchannels is represented by "M."

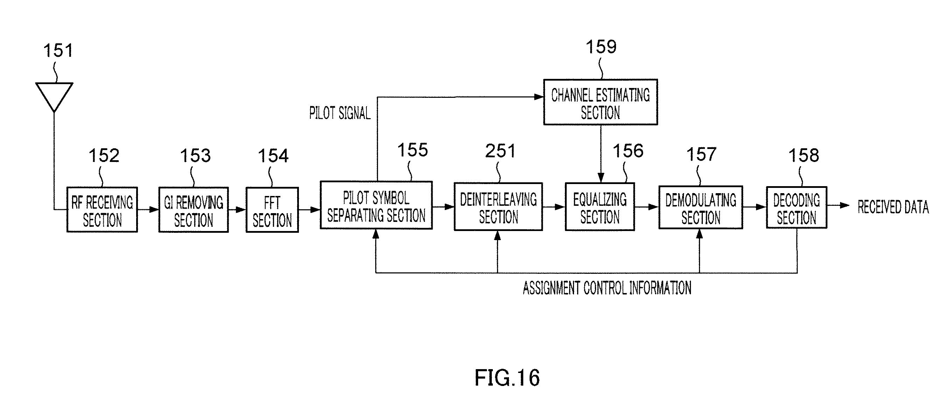

FIG.16 is a block diagram showing a main configuration of the multicarrier receiving apparatus according to this embodiment corresponding to the above multicarrier transmitting apparatus. Further, the same components as in the multicarrier receiving apparatus described in Embodiment 1 will be assigned the same reference numerals and overlapping description will be omitted.

The multicarrier receiving apparatus of this embodiment differs from the multicarrier receiving apparatus of Embodiment 1 in providing deinterleaving section 251 between pilot symbol separating section 155 and equalizing section 156. With reference to interleaving patterns included in assignment control information outputted from decoing section 158, deinterleaving section 251 deinterleaves symbols of a received frame outputted from FFT section 154.

In this way, according to this embodiment, even when interleaving is carried out, it is possible to avoid disproportionately replacing data symbols of part of data with second pilots, so that it is possible to improve error robustness resulting from interleaving and obtain diversity gain resulting from repetition by using the rest of the data symbols.

Further, although a case has been described with this embodiment as an example where a multicarrier transmitting apparatus records in advance replacement position patterns corresponding to the number of replacements and satisfying the constraint condition and interleaving patterns, variation as described below may be adopted as a method of determining replacement positions.

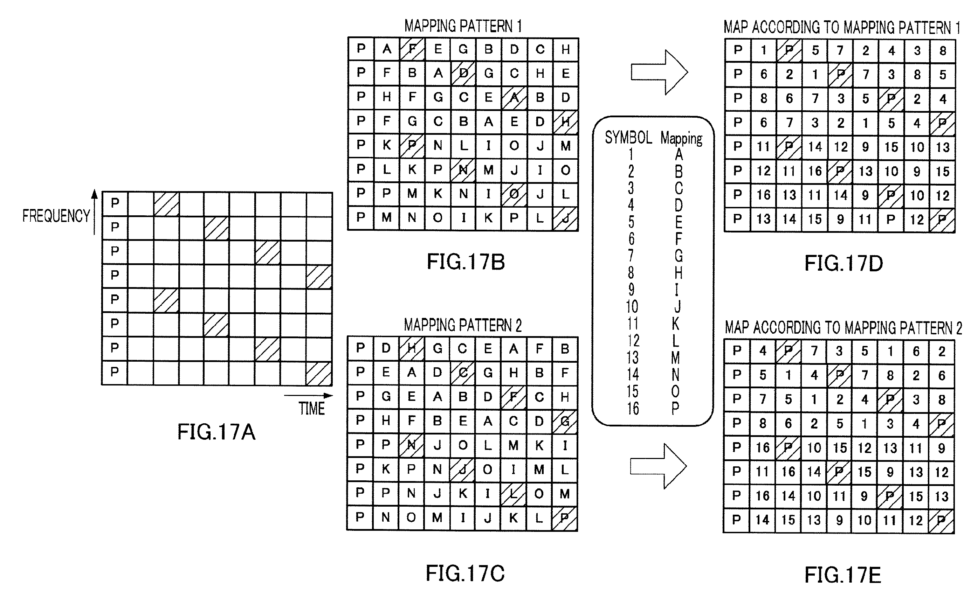

FIG. 17 shows variation of a method for determining replacement positions.

In this example, interleaving section 241 maps repetition symbols for a transmission data signal outputted from repetition section 103, according to a predetermined mapping pattern matching replacement position patterns outputted from replacement position determining section 141 and satisfying the constraint condition. A plurality of predetermined mapping patterns including the above predetermined mapping pattern are recorded in an internal memory of interleaving section 241. That is, in this example, instead of selecting the interleaving pattern satisfying the constraint condition, repetition symbols are mapped according to the mapping pattern satisfying the constraint condition. The transmission data signal in which mapping is changed according to the mapping pattern is outputted to replacement section 142.

For example, FIG.17A shows replacement position patterns outputted from replacement position determining section 141. FIG.17B and FIG.17C show two patterns of a plurality of mapping patterns recorded in advance in an internal memory of interleaving section 241. Interleaving section 241 selects one of a plurality of mapping patterns matching replacement position patterns outputted from replacement position determining section 141 and satisfying the constraint condition, and maps repetition symbols according to the mapping patterns and the repeated data symbol numbers of FIG.17B and FIG.17C. FIG. 17D and FIG. 17E show data frames after the data symbols in the replacement position patterns in FIG.17A are replaced with second pilots. The alphabets A to P shown in FIG.17B and FIG.17C are associated with subcarriers and, by linking the alphabets with the data numbers of repetition symbols, represent subcarriers for mapping. In this figure, a case is shown where data of repetition numbers in ascending order is mapped to subcarriers represented by the alphabet "A" in descending order. Further, the association between alphabets and data of repetition numbers is determined by an arbitrary method.

### (Embodiment 3)

The multicarrier transmitting apparatus according to Embodiment 3 of the present invention interleaves repetition signals according to an interleaving pattern determined between the transmitting apparatus and the receiving apparatus and determines replacement positions with second pilots. That is, the interleaving pattern is not changed according to replacement positions, and so it is not necessary to separately report the interleaving pattern to the multicarrier receiving apparatus as in Embodiment 2.

That is, the multicarrier transmitting apparatus according to this embodiment corresponds to variation of the multicarrier transmitting apparatus described in Embodiment 2. Hereinafter, different part in the operation of second pilot replacement section 204a from second pilot replacement section 204 described in Embodiment 2 will be described.

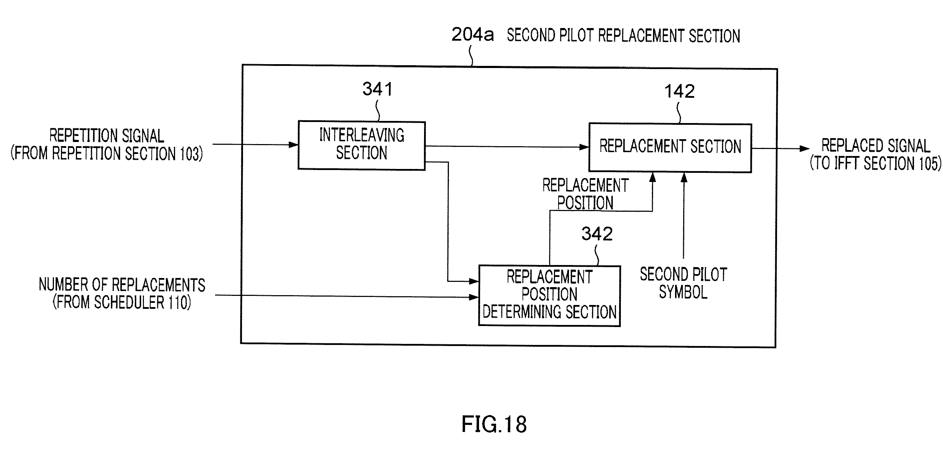

FIG.18 is a block diagram showing a main configuration inside second pilot replacement section 204a. Further, the same components as second pilot replacement section 204 described in Embodiment 2 will be assigned the same reference numerals and overlapping description will be omitted.

Interleaving section 341 interleaves repetition signals according to a predetermined interleaving pattern determined in advance between the transmitting apparatus and the receiving apparatus without taking into account the constraint condition described in Embodiments 1 and 2.

Replacement position determining section 342 determines replacement positions of the interleaved signals that satisfy the constraint condition of (RF after replacement) ≧ (RF before replacement - 1), based on the interleaving pattern outputted from interleaving section 341 and the number of replacements designated by scheduler 110.

Replacement section 142 replaces the interleaved repetition symbols in the transmission frame with second pilots according to the replacement positions determined in replacement position determining section 342.

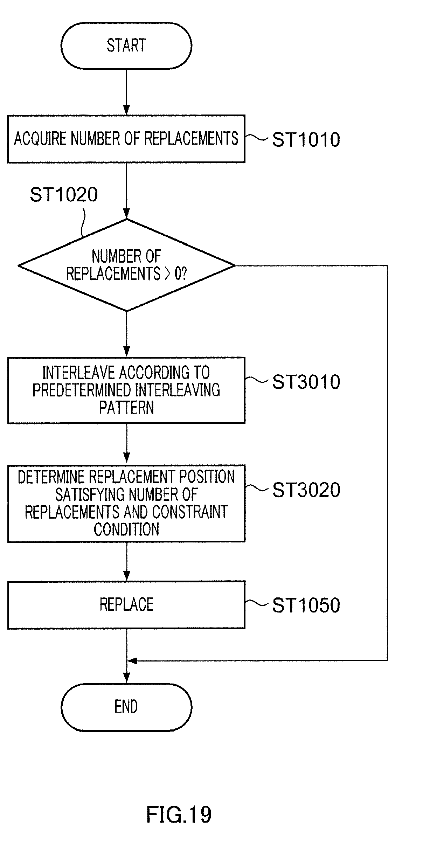

FIG.19 is a flowchart showing steps of replacement processing with second pilots. The same steps as the steps described in Embodiment 1 (see FIG.6) will be assigned the same reference numerals and detailed description will be omitted.

When the number of replacements is decided to be larger than "zero" in ST1020, interleaving section 341 carries out interleaving according to a predetermined interleaving pattern (ST3010). Then, replacement positions satisfying the number of replacements and the above constraint condition of (RF after replacement) ≧ (RF before replacement - 1) are determined (ST3020) and replacement with second pilots are carried out at these replacement positions (ST1050). Further, for example, replacement positions may be determined by using the method described in Embodiment 1, that is, by recording predetermined replacement position patterns in advance and using these patterns.

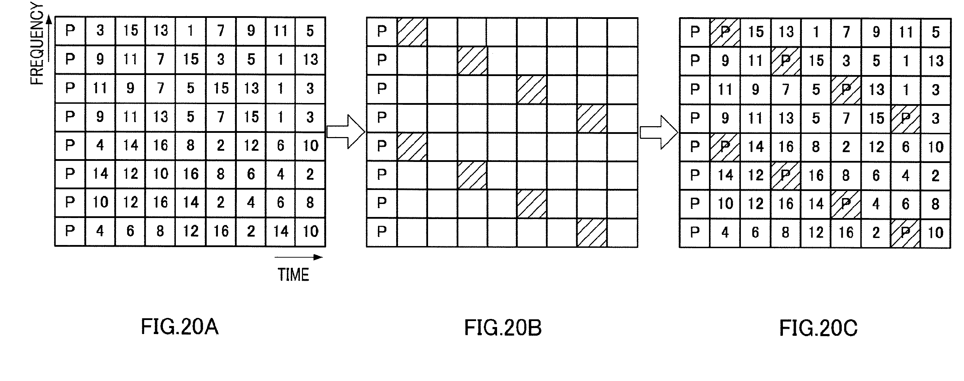

FIG.20 shows the detailed steps in which a transmission frame is processed by replacing processing with the above second pilots.

FIG.20A shows a transmission frame interleaved according to a predetermined interleaving pattern before replacement with second pilots. FIG.20B shows replacement positions determined by replacement position determining section 141 with diagonal lines. FIG.20C shows a transmission frame after replacement with second pilots.

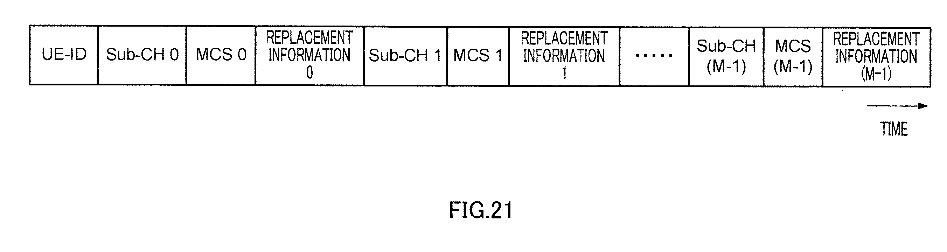

FIG.21 shows an example of a frame format for assignment control information transmitted from the multicarrier transmitting apparatus according to this embodiment.

Unlike Embodiment 1, according to this embodiment, positions of second pilots are not determined uniquely, and, consequently, instead of replacement patterns, it is necessary to report replacement information showing the locations of replacement positions for the number of replacements to the multicarrier receiving apparatus. In the frame format for this assignment control information, as shown in FIG.21, UE-ID is mapped at the top, and, following this, an assigned subchannel ID, the MCS matching this ID and the replacement information showing replacement positions with second pilots, are mapped. In this case, the number of assigned subchannels is represented by "M." Referring to MCS information reflecting each subchannel ID shown in FIG.21, when the number of replacements with second pilots is "zero," information formed with all zeroes may be embedded in replacement information corresponding to the MCS information.

In this way, according to this embodiment, even when interleaving is carried out, it is possible to avoid disproportionately replacing data symbols of part of data with second pilots, so that it is possible to improve error robustness resulting from interleaving and obtain diversity gain resulting from repetition using the rest of the data symbols. Further, interleaving patterns are not changed according to replacement positions and so need not to be reported to the multicarrier receiving apparatus, so that it is possible to reduce the amount of signaling.

Embodiments of the present invention have been described.

The multicarrier transmitting apparatus, multicarrier receiving apparatus, multicarrier transmitting method and multicarrier receiving method according to the present invention are not limited to the above embodiments and can be realized by variously modified embodiments.

For example, when error correction coding is carried out using turbo code, repetition symbols formed with parity bits may be replaced with second pilots preferentially over repetition symbols formed with systematic bits. In this way, it is possible to improve error rate performances more than by replacing repetition symbols formed with systematic bits with second pilots.

To be more specific, in addition to the constraint condition of (RF after replacement) ≧ (RF before replacement - 1), the constraint condition of preferentially replacing repetition symbols formed with parity bits may be added. Then, in Embodiments 1 and 3, replacement position determining section 141 and 342 derive pilot replacement positions satisfying the above constraint condition, and, in Embodiment 2, interleaving section 241 interleaves a transmission frame according to an interleaving pattern satisfying the above constraint condition.

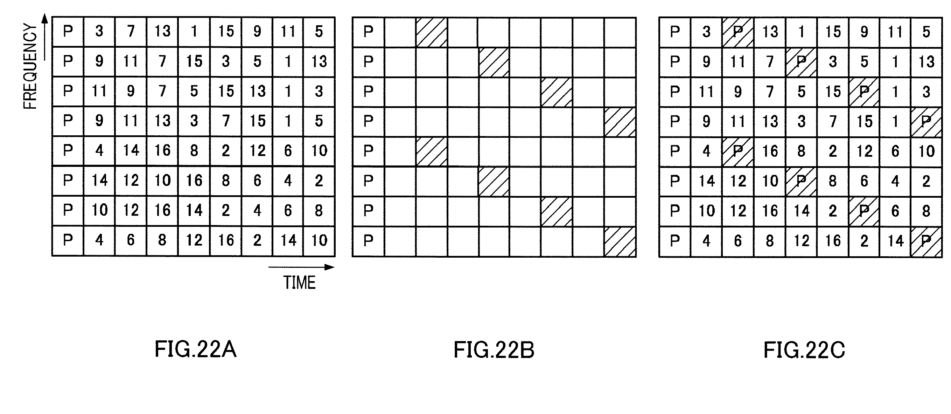

FIG.22 shows the detailed steps in which a transmission frame is processed by the above replacing processing. Further, systematic bits 1 to 3 and parity bits 4 to 16 are repeated in data symbols 1 to 16 as repetition symbols.

FIG.22A shows a transmission frame after interleaving. FIG.22B shows replacement positions satisfying the above constraint condition with diagonal lines. FIG.22C shows a transmission frame after replacement with second pilots. As a result, repetition symbols 4, 5, 7, 10, 13, 14, 15 and 16 are replaced with second pilots, repetition symbols formed with systematic bits are not selected and two or more repetition symbols of the same data are not replaced.

Further, in the above embodiments, when distinction can be made in the transmission frame between repetition symbols formed with systematic bits and repetition symbols formed with parity bits, after repetition symbols formed with parity bits are replaced with second pilot symbols one by one and when more replacements with second pilot symbols are necessary, repetition symbols formed with parity bits may be replaced with second pilots instead of repetition symbols formed with systematic bits. In this way, it is possible to prevent error rate performances of systematic bits which are very important for decoding, from deteriorating.

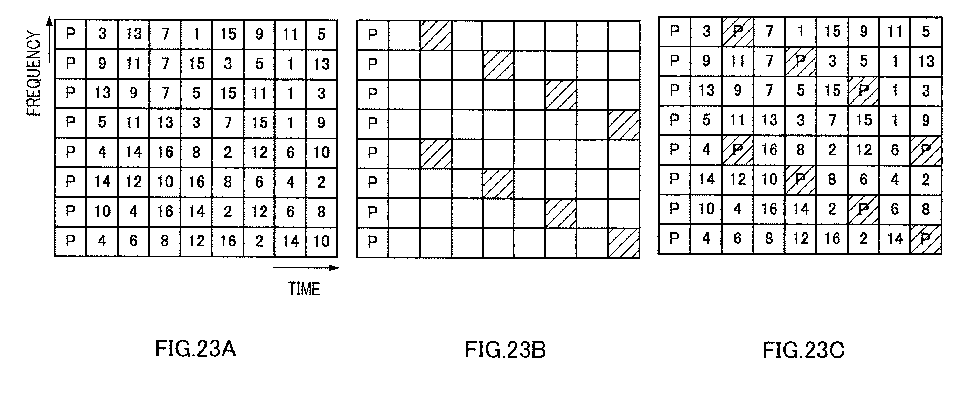

FIG.23 shows the detailed steps in which a transmission frame is processed by the above replacement processing. In this case, systematic bits 1 to 9 and parity bits 10 to 16 are repeated in data symbols 1 to 16 as repetition symbols.

FIG.23A shows a transmission frame after interleaving according to a predetermined interleaving pattern. FIG.23B shows replacement positions satisfying the above constraint condition with diagonal lines. FIG.23C shows a transmission frame after replacement with second pilots. As a result, repetition symbols 10, 10, 11, 12, 13, 14, 15 and 16 are replaced with second pilots, repetition symbols formed with systematic bits are not selected and the above constraint condition can be satisfied.

Further, in the above embodiments, replacement patterns with second pilots or interleaving patterns may be changed according to delay spread or the Doppler frequency in channel response from the multicarrier receiving apparatus. In this way, it is possible to flexibly support variations in the time domain and the frequency domain of the channel environment.

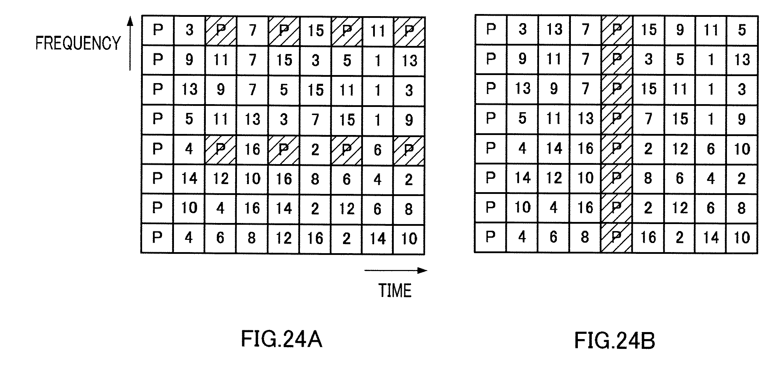

FIG.24 shows in detail what a transmission frame will be like by the above replacement processing.

FIG.24A shows a transmission frame where, when it is reported in CQI report from the multicarrier receiving apparatus that the Doppler frequency is large and variations in the time domain in channel response are great, the multicarrier transmitting apparatus carries out replacement with second pilots by selecting replacement positions or interleaving patterns such that second pilots are partially replaced in the time domain, so that the multicarrier transmitting apparatus satisfies the constraint condition of (RF after replacement) ≧ (RF before replacement - 1) and follow variations in the time domain.

Further, FIG. 24B shows a transmission frame where, when it is reported in CQI report from the multicarrier receiving apparatus that delay spread is large and variations in the frequency domain in channel response are great, the multicarrier transmitting apparatus carries out replacement with second pilots by selecting replacement positions or interleaving patterns such that second pilots are partially replaced in the frequency domain, so that the multicarrier transmitting apparatus satisfies the constraint condition of (RF after replacement) ≧ (RF before replacement - 1) and follow variations in the time domain.

Further, in the above embodiments, transmission power for the rest of repetition symbols (data symbols of the same data) other than repetition symbols replaced with second pilot symbols may be set higher and the symbols may be transmitted. In this way, it is possible to prevent error rate performances deterioration caused by the decrease in the repetition factor due to replacement.

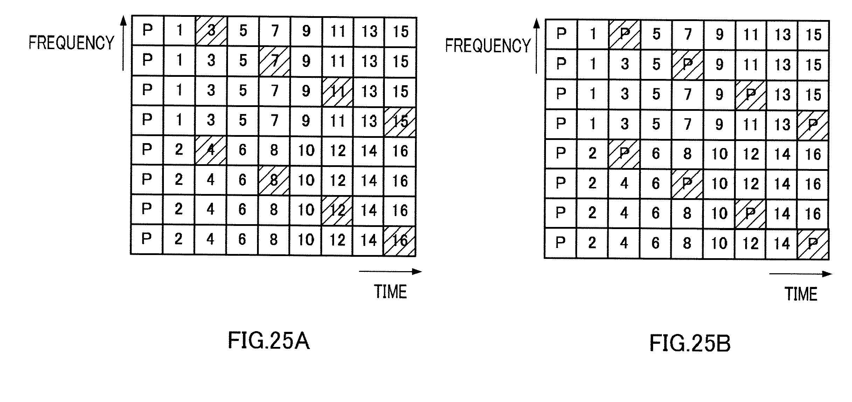

FIG.25 shows in detail which transmission power of data symbols is set higher following the above replacement processing.

FIG.25A shows a transmission frame generated by repetition. Data symbols with diagonal lines show replacement positions with second pilots. FIG.25B shows a transmission frame after replacement with second pilots. Transmission power of symbols with diagonal lines in FIG.25 is set higher than normal and the symbols are transmitted.

Further, in the above embodiments, symbols adjacent to the first pilots may be replaced with second pilots. By this means, provided that first pilots and second pilots neighbor each other and similar channel variations may apply between the adjacent pilots, so that the multicarrier receiving apparatus can improve the accuracy of channel estimation by combining channel estimation values estimated using pilots separately.

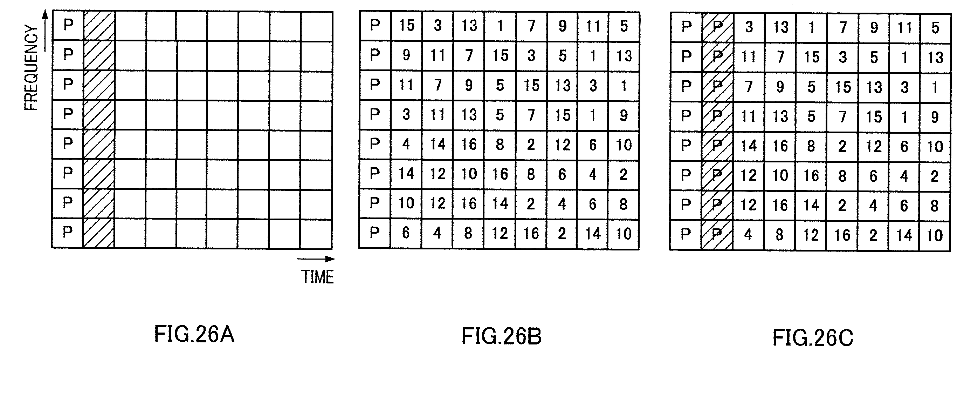

FIG.26 shows the detailed steps in which a transmission frame is processed by the above replacement processing.

Symbols with diagonal lines in FIG.26A show replacement positions with second pilots. As shown in this figure, the replacement positions with second pilots are adjacent to the first pilots. FIG.26B shows a transmission frame interleaved according to an interleaving pattern satisfying the constraint condition. FIG.26C shows a transmission frame after replacement with second pilots.

Further, in the above embodiments, when the same repetition symbol overlaps in a pilot replacement position, one of the repetition symbols is kept unreplaced and the number of pilot replacements is reduced by one, so that only one repetition symbol is replaced. In this way, it is possible to simplify the design of the interleaving section and the configuration of the replacement position determining section.

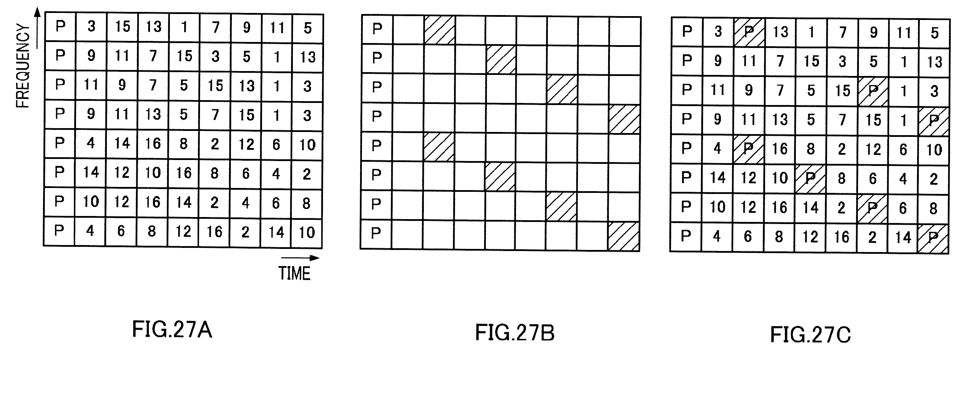

FIG.27 shows in detail what a transmission frame will be like by the above replacement processing.

FIG.27A shows a transmission frame interleaved according to a predetermined interleaving pattern. FIG.27B shows replacement positions with second pilots recorded in the replacement position determining section. In this example, as in Embodiment 3, replacement positions determined in advance between the transmitting apparatus and the receiving apparatus instead of deriving replacement positions satisfying the constraint condition of (RF after replacement) ≧ (RF before replacement - 1). FIG.27C shows a transmission frame after replacement with second pilots. As a result, according to replacement positions of FIG . 27B, repetition symbols of data #3, data #4, data #10, data #13, data #14, data #15, data #15 and data #16 are replaced and so two repetition symbols of data #15 are replaced. Then, the repetition symbols of data #15 in the second row from the top and the fifth column from the left, is not replaced and only the repetition symbol of data #15 in the first row from the top and the third column from the left is replaced. That is, in this case, the number of replacements decreases by one.

The multicarrier transmitting apparatus and multicarrier receiving apparatus according to the present invention can be provided in a communication terminal apparatus and base station apparatus in a mobile communication system, and it is possible to provide a communication terminal apparatus, base station apparatus and mobile communication system which include the same above effects.

Although cases have been described here as examples where a communication system according to the present invention adopts the OFDM scheme, the present invention can be applied to communication systems adopting schemes other than the OFDM scheme.

Further, although a case has been described here as an example where the communication system according to the present invention adopts an FDD scheme, the present invention can be adopted to a communication system adopting the TDD (Time Division Duplex) scheme.

Further, although examples of various mapping of repetition symbols in a transmission frame have been shown, mapping of repetition symbols is not limited to these.

Further, although various examples of frame formats for assignment control information have been described with the embodiments, the frame format for assignment control information according to the present invention is not limited to these.

Also, although cases have been described with the above embodiment as examples where the present invention is configured by hardware. However, the present invention can also be realized by software. For example, it is possible to implement the same functions as in the base station apparatus of the present invention by describing algorithms of the radio transmitting methods according to the present invention using the programming language, and executing this program with an information processing section by storing in memory.

Each function block employed in the description of each of the aforementioned embodiments may typically be implemented as an LSI constituted by an integrated circuit. These may be individual chips or partially or totally contained on a single chip.

"LSI" is adopted here but this may also be referred to as "IC", "system LSI", "super LSI", or "ultra LSI" depending on differing extents of integration.

Further, the method of circuit integration is not limited to LSI's, and implementation using dedicated circuitry or general purpose processors is also possible. After LSI manufacture, utilization of an FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

The present application is based on Japanese PatentApplicationNo.2005-222218, filed on July 29, 2005, the entire content of which is expressly incorporated by reference herein.

### Industrial Applicability

The multicarrier transmitting apparatus, multicarrier receiving apparatus, multicarrier transmitting method and multicarrier receiving method according to the present invention can be applied for use in communication terminal apparatuses and base station apparatuses in mobile communication systems.

## Claims

1. A multicarrier transmitting apparatus comprising:
a repetition section that generates repetition symbols by repeating a data symbol;
a replacement section that replaces part of symbols of the repetition symbols with pilot symbols; and
a transmitting section that transmits the repetition symbols partly replaced with pilot symbols.

2. The multicarrier transmitting apparatus according to claim 1, wherein:
the repetition section repeats data symbols of a plurality of data items to generate repetition symbols of the plurality of data items; and
the replacement section replaces repetition symbols comprising part of the plurality of data items with pilot symbols, out of the repetition symbols of the plurality of data items.

3. The multicarrier transmitting apparatus according to claim 1, further comprising an acquiring section that acquires the number of symbols subject to the replacement and determined according to a repetition factor,
wherein the replacement section replaces symbols equaling the acquired number of symbols with pilot symbols, out of the repetition symbols.

4. The multicarrier transmitting apparatus according to claim 1, wherein the replacement section carries out the replacement such that the pilot symbols are mapped in a uniform distribution on a two dimensional plane defined by the time domain and the frequency domain of the repetition symbols.

5. The multicarrier transmitting apparatus according to claim 1, wherein the replacement section replaces repetition symbols of the same data with pilot symbols only once.

6. The multicarrier transmitting apparatus according to claim 1, further comprising an interleaving section that interleaves the repetition symbols,
wherein the replacement section replaces the interleaved repetition symbols with pilot symbols.

7. The multicarrier transmitting apparatus according to claim 6, wherein the replacement section comprises a plurality of predetermined replacement patterns for replacing repetition symbols of the same data with pilot symbols only once out of the interleaved repetition symbols.

8. The multicarrier transmitting apparatus according to claim 6, wherein the interleaving section comprises a plurality of predetermined interleaving patterns for replacing repetition symbols of the same data with pilot symbols only once.

9. The multicarrier transmitting apparatus according to claim 1, wherein the replacement section replaces repetition symbols comprised of parity bits with pilot symbols preferentially over repetition symbols comprised of systematic bits, out of repetition symbols.

10. The multicarrier transmitting apparatus according to claim 1, wherein the replacement section carries out the replacement such that the pilot symbols are mapped disproportionately in the time domain or the frequency domain on a two dimensional plane defined by the time domain and the frequency domain of the repetition symbols.

11. The multicarrier transmitting apparatus according to claim 1, wherein transmission power for the rest of repetition symbols other than the repetition symbols partly replaced with the pilot symbols is set higher than normal.

12. A communication terminal apparatus comprising the multicarrier transmitting apparatus according to claim 1.

13. A base station apparatus comprising the multicarrier transmitting apparatus according to claim 1.

14. A multicarrier transmission method comprising:
repeating a data symbol to generate repetition symbols;
replacing part of symbols of the repetition symbols with pilot symbols; and
transmitting the repetition symbols partly replaced with the pilot symbols.
